# EUROPEAN PATENT APPLICATION

(11) **EP 2 333 596 A1**
(43) Date of publication of application: **15.06.2011**
(21) Application number: 09809986.4
(22) Date of filing: 27.08.2009
(51) Int. Cl.: G02B 6/13, G02B 6/26, G02B 6/42

(54) **METHOD FOR MANUFACTURING OPTICAL WAVEGUIDE**

(30) Priority: 01.09.2008 JP 2008223236
(71) Applicant: Nissan Chemical Industries, Ltd., Chiyoda-ku Tokyo 101-0054 (JP)
(72) Inventor: SATO, Tetsuo, Funabashi-shi Chiba 274-8507 (JP); YOSHIMURA, Tetsuzo, Machida-shi Tokyo 194-0014 (JP)
(74) Representative: Wiedemann, Peter
(86) International application number: PCT/JP2009/064967
(87) International publication number: WO 2010/024336

(57) **Abstract**

There is provided a method for readily manufacturing an optical waveguide having a high Δn value at low cost, and in specific, a self-organizing optical waveguide that optical waveguides having a high Δn value can be connected to each other; and a method for manufacturing the self-organizing optical waveguide. A method for manufacturing an optical waveguide, comprising step (A): forming a coating film on a lower clad portion using a coating solution including an oxide precursor containing a titanium atom and a silicon atom; and step (B): irradiating the coating film with a radiation beam under heating to form a core/clad layer including an irradiated core region having a higher refractive index and an unirradiated clad region having a refractive index lower than that of the core region.

## Description

### TECHNICAL FIELD

The present invention relates to a method for manufacturing an optical waveguide having a large difference in the refractive index between a core and a clad. Furthermore, the present invention relates to self-organizing optical waveguides and a method for manufacturing the same.

### BACKGROUND ART

Recently, demands for high speed and high capacity have increased for communication and signal transmission. For the wiring in equipment, the importance of optical signal transmission has also increased in place of electrical signal transmission. A signal beam is transmitted through an optical fiber or an optical waveguide, and as a method for connecting such optical waveguides to each other, techniques of self-organizing optical waveguides have been actively studied.

A mainly studied self-organizing optical waveguide is a self-formed optical waveguide that is manufactured at a leading end of an optical waveguide by an outgoing beam from the optical waveguide immersed in a photosensitive resin solution.
For example, an optical waveguide and a method for manufacturing the optical waveguide are disclosed. In other words, a photo-curable resin solution having a relatively high refractive index is irradiated with an outgoing beam from an optical fiber to form an axis-like cured object at a leading end of the optical fiber as a core. Next, an uncured resin solution is removed. The cured object is embedded in a photo-curable resin solution having a lower refractive index than that of the core, then the whole is cured to form a clad, and consequently the optical waveguide is manufactured (see Patent Document 1). Such manufacturing method has a problem that because the core is not supported when the uncured resin solution is removed, the optical fiber and the self-organizing optical waveguide may have misaligned core axes. Such method has another problem of a complicated manufacturing process and low productivity.

Hence, there has been studied another method for manufacturing a self-organizing optical waveguide that does not require the removal of an uncured resin solution. For example, a disclosed method for manufacturing an optical waveguide is as follows. Two photo-curable resin solutions in which a refractive index and a curing start point are different from each other are mixed. Only the higher refractive component in the resin solution is selectively cured by an outgoing beam from an optical fiber to form a core. At this time, because the mixed solution of the two photo-curable resin solutions remains around the core, the two photo-curable resin solutions are simultaneously cured to prepare a clad having a lower refractive index than that of the core (see Patent Document 2).

Furthermore, a method for manufacturing an optical waveguide that is self farmed using photostructural change of a compound, instead of focusing attention on the difference in a refractive index between photo-curable resin solutions, has been studied. For example, a disclosed method for manufacturing an optical waveguide is as follows. A resin containing a 1,4-dihydropyridine derivative is irradiated with an outgoing beam from an optical fiber to change the structure of the 1,4-dihydropyridine derivative in an area to be a core alone. Subsequently, the 1,4-dihydropyridine derivative that is not structure-changed is selectively removed from the resin, thus the content of the structure-changed 1,4-dihydropyridine derivative is increased only in the core, and consequently an optical waveguide having the refractive index distribution can be manufactured (see Patent Document 3).

Such related art manufacturing techniques for self-organizing waveguides are intended to be used for the connection of optical fibers to each other. On this account, in related art self-organizing optical waveguides, the relative refractive index difference (Δn) between a core and a clad is usually designed as 0.1 to 0.5% that is substantially the same as that of an optical fiber. Furthermore, a resin compound is generally very hard to have a high Δn value due to its chemical characteristics, and considering interface adhesion, thermophysical properties, and the like, the practicable upper limit of Δn is at most about 4% in the manufacture of self-organizing waveguides.

Recently, the packing density of optical wiring in equipment has been increased. To address this, an optical waveguide in which light can be confined to be transmitted with a small optical loss even in a fine core is being studied. Commonly, it is know that a larger relative refractive index difference (Δn) between a core and a clad increases a confined beam in the core to reduce an acceptable distance between the cores. Hence, methods for manufacturing an optical waveguide having a high Δn value is actively studied (see Patent Documents 4 and 5).

### Related Art Documents

### Patent Documents

Patent Document 1: Japanese Patent Application Publication No. JP-A-2006-243155
Patent Document 2: Japanese Patent Application Publication No. JP-A-2000-347043
Patent Document 3: Japanese Patent Application Publication No. JP-A-2004-246335
Patent Document 4: Japanese Patent Application Publication No. JP-A-2006-293088
Patent Document 5: Japanese Patent Application Publication No. JP-A-2003-156642

### DISCLOSURE OF THE INVENTION

### Problem to be Solved by the Invention

As described above, while the methods for manufacturing an optical waveguide having a high Δn value have been developed, there have been demands for a method for readily manufacturing an optical waveguide as well as a method for manufacturing a self-organizing waveguide having a Δn value higher than ever by which optical waveguides having such high Δn value can be connected to each other.

In view of the above, it is an object of the present invention to provide a method for readily manufacturing an optical waveguide having a high Δn value at low cost, and in particular, to provide a self-organizing optical waveguide and a method for manufacturing the self-organizing optical waveguide.

### Means for Solving the Problem

In order to achieve the object, the inventors of the present invention have repeatedly carried out intensive studies, and as a result, have found that, when a coating film is formed using a solution (coating solution) including an oxide precursor containing a titanium atom and a silicon atom, or the solution is held or filled up in a space for connection or structure formation, and then the coating film or the solution region that holds or is filled with the solution containing the oxides is irradiated with a radiation beam particularly under heating, the region irradiated with the radiation beam obtains a refractive index that is largely different form the refractive index in an unirradiated region (or a region irradiated with low energy), and that a core portion (irradiated region) and a clad portion (unirradiated region or region irradiated with low energy) can be readily formed for an optical waveguide, and the present invention has been accomplished.

As a first aspect, a method for manufacturing an optical waveguide includes step (A) and step (B):
step (A): forming a coating film on a lower clad portion using a solution including an oxide precursor containing a titanium atom and a silicon atom, or holding the solution in a space for connection or structure formation or filling the space with the solution; and
step (B): irradiating the coating film or a region where the solution is held or filled with a radiation beam under heating to form a core/clad layer including an irradiated core region having a higher refractive index and a clad region having a refractive index lower than that of the core region, the clad region remaining unirradiated or irradiated with low energy.
As a second aspect, the method for manufacturing an optical waveguide according to the first aspect includes step (A) and step (B):
step (A): forming a coating film on a lower clad portion using a coating solution including an oxide precursor containing a titanium atom and a silicon atom; and
step (B): irradiating the coating film with a radiation beam under heating to form a core/clad layer including an irradiated core region having a higher refractive index and an unirradiated clad region having a refractive index lower than that of the core region.
   As a third aspect, in the method for manufacturing an optical waveguide according to the second aspect, the radiation beam is applied in the direction of beam transmission in the optical waveguide in step (B).
   As a fourth aspect, in the method for manufacturing an optical waveguide according to the second aspect or the third aspect, the radiation beam is a laser beam in step (B).
   As a fifth aspect, in the method for manufacturing an optical waveguide according to any one of the second aspect to the fourth aspect, the coating film is homogeneously formed to have a constant molar ratio of the titanium atom and the silicon atom over the coating film in step (A).
   As a sixth aspect, in the method for manufacturing an optical waveguide according to any one of the second aspect to the fifth aspect, a coating solution having a titanium atom and silicon atom molar ratio of titanium atom (mol) : silicon atom (mol) = 5 : 95 to 95 : 5 is used in step (A).
   As a seventh aspect, the method for manufacturing an optical waveguide according to any one of the second aspect to the sixth aspect further includes step (C):
step (C): forming an upper clad portion on the core/clad layer.
As an eighth aspect, in the method for manufacturing an optical waveguide according to the seventh aspect, in step (C), the upper clad portion is formed using the coating solution including an oxide precursor containing a titanium atom and a silicon atom described in step (A).
As a ninth aspect, in the method for manufacturing an optical waveguide according to the seventh aspect or the eighth aspect, step (C) includes applying the coating solution including an oxide precursor containing a titanium atom and a silicon atom described in step (A) to the core/clad layer, and subsequently heat-treating the solution at 25°C to 250°C to form the upper clad portion on the core/clad layer.
As a tenth aspect, in the method for manufacturing an optical waveguide according to any one of the second aspect to the ninth aspect, the coating film is formed from a coating solution containing a polycondensation product of alkoxytitanium and alkoxysilane.
As an eleventh aspect, the method for manufacturing an optical waveguide according to the first aspect includes step (A) and step (B):
step (A): holding a solution including an oxide precursor containing a titanium atom and a silicon atom in a space for connection or structure formation or filling the space with the solution; and
step (B): irradiating a region where the solution is held or filled with a radiation beam under heating to form a core/clad layer including an irradiated core region having a higher refractive index and a clad region having a refractive index lower than that of the core region, the clad region remaining unirradiated or irradiated with low energy.

### Effects of the Invention

According to the present invention, a coating film that is formed by using a coating solution including an oxide precursor containing a titanium atom and a silicon atom or a solution region that holds or is filled with a solution containing the oxides is simply irradiated with a radiation beam under heating to prepare a core region of an optical waveguide from the irradiated region and a clad region of the optical waveguide from an unirradiated region (or a region irradiated with low energy). In other words, the operation is simple because the method does not require development processing and the like that are required for manufacturing optical waveguides according to related arts.

Furthermore, according to the manufacturing method of the present invention, a core region and a clad region in a core/clad layer can be manufactured from the same materials.
In other words, it is expected that the manufacturing method of the present invention can reduce the problems such as poor adhesion and heat resistance that occur in an interface between the core region and the clad region due to the difference in physical properties of materials in related arts.

In addition, according to the manufacturing method of the present invention, an optical waveguide having a large difference in the refractive index between the core region and the clad region can be readily manufactured at low cost. Hence, an optical waveguide having a large optical confinement effect can be readily manufactured, and thus the method is useful for downsizing an optical device.

Moreover, according to the present invention, a self-organizing optical waveguide having such characteristics can be readily manufactured.

### BRIEF DESCRIPTION OF THE DRAWINGS

[FIG. 1] FIG. 1 is a schematic model showing the principle of a reflective self-organized lightwave network (R-SOLNET).
[FIG. 2] FIG. 2 is a view showing the changes in refractive index in a wavelength from 400 nm to 1600 nm of coating films irradiated with ultraviolet light (2250 mJ/cm², 750 mJ/cm²) and without irradiation of ultraviolet light.
[FIG. 3] FIG. 3 is an observation view of optical waveguides each viewed from an upper clad portion in the self-organizing optical waveguide prepared in Example 1.
[FIG. 4] FIG 4 is an observation view of optical waveguides each viewed from an upper clad portion in the self-organizing optical waveguide prepared in Example 2.
[FIG 5] FIG. 5 is an observation view of an optical waveguide viewed from an upper clad portion in the self-organizing optical waveguide prepared in Example 3.

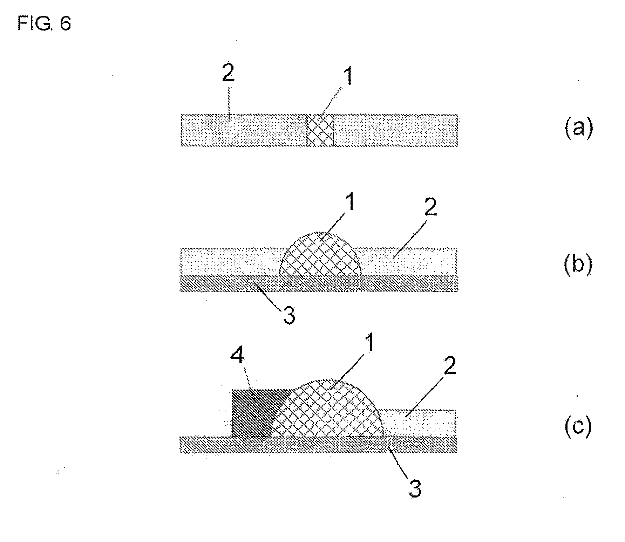

[FIG. 6] FIG. 6 is a view showing other forms of the optical waveguide of the present invention, FIG. 6A being a view showing a form in which a solution 1 containing an oxide precursor is held between two end faces of optical waveguides 2, FIG. 6B being a view showing a form in which between two optical waveguides 2 set on a substrate 1 is filled with a solution 1 containing an oxide precursor such that the optical waveguides 2 are connected with each other, and FIG. 6C being a view showing a form in which between an optical waveguide 2 and a light source 4 is filled with a solution 1 containing an oxide precursor such that the optical waveguide 2 is connected to the light source 4.

### BEST MODES FOR CARRYING OUT THE INVENTION

Hereinafter, the present invention will be described in detail.
The present invention is a method for manufacturing an optical waveguide, and specifically, is a manufacturing method that includes: step (A) of forming a coating film on a lower clad portion using a solution containing an oxide precursor (hereinafter, also referred to as specific precursor) containing a titanium atom and a silicon atom, or holding the solution in a space for connection or structure formation or filling the space with the solution; and step (B) of irradiating the coating film or the solution-held or solution-filled region with a radiation beam under heating to form a core/clad layer including an irradiated core region that has a higher refractive index and a clad region that is an unirradiated region or a region irradiated with low energy and that has a refractive index lower than that of the core region.
Hereinafter, the method for manufacturing an optical waveguide by forming a coating film using a coating solution that includes the oxide precursor containing a titanium atom and a silicon atom and then irradiating the coating film with a radiation beam under heating will be mainly described.

Here, the present invention has a feature that the core region has a higher refractive index than that of the clad region. It is the advantage of a core/clad layer obtained by irradiating a coating film that is obtained from a coating solution containing a specific precursor, specifically from a coating solution containing a polycondensation product of alkoxytitanium and alkoxysilane, with a radiation beam under heating.
A preferred specific precursor is obtained by hydrolysis and condensation of alkoxytitanium and alkoxysilane as described later, that is, it primarily means a polycondensation product of metal alkoxides. The alkoxytitanium is usually stabilized by a stabilizer (such as β-diketones and glycols) for the reaction because it is readily hydrolyzed. A coating film obtained from the coating solution containing the specific precursor is dried, and then the coating film is irradiated with ultraviolet light under heating. As a result, elimination of the stabilizer used for stabilizing the alkoxytitanium is activated in an ultraviolet irradiated region, and concurrently with the elimination, condensation/polymerization of the specific precursor proceeds by heat supplied to the coating film. In contrast, in a region without irradiation of ultraviolet light, condensation/polymerization of the specific precursor does not easily proceed as compared with in the region irradiated with ultraviolet light. It is supposed that such phenomenon increases the refractive index in the region irradiated with ultraviolet light as compared with the region without irradiation of ultraviolet light.
It is supposed that the simple manufacturing method of the present invention can induce a high refractive index difference in this manner.

In step (B), the radiation beam has a wavelength of 0.001 nm to 600 nm, and preferably 200 nm to 500 nm. More preferably, the wavelength is 250 nm to 410 nm. The heating is preferably performed in a temperature range from 25°C to 250°C.
In step (B), the radiation beam having a wavelength of more than 600 nm provides insufficient energy, thus the hydrolysis/condensation of alkoxytitanium does not sufficiently proceed in the irradiated region to be a core region, and the refractive index in the region may not be increased. The radiation beam having a wavelength of less than 0.041 nm provides excess energy, and thus the prepared self-organizing optical waveguide is difficult to be controlled.
Furthermore, an excessive heat treatment causes the elimination of a stabilizer from the alkoxytitaniums that is protected with the stabilizer for suppressing excessive hydrolysis/ condensation in the unirradiated region that is to be a clad region, and as a result, the hydrolysis/condensation proceeds to increase the refractive index.
In other words, in both cases that the heat treatment is insufficient and excessive, the refractive index difference between the core region and the clad region is reduced. Hence, it is desirable to accordingly select the radiation beam wavelength, the heat treatment temperature, and the heat treatment time.

In order to obtain a high refractive index difference between the core region and the clad region, it is desirable that the titanium atom and silicon atom molar ratio is 5 : 95 to 95 : 5 in the coating film and the core/clad layer. The titanium atom and silicon atom molar ratio is preferably 50 : 50 to 95 : 5, and more preferable 70 : 30 to 95 : 5.

### [Coating Solution Used for Forming Coating Film]

In the present invention, a coating film for forming the core/clad layer by ultraviolet irradiation and heat treatment is formed from a coating solution containing the specific precursor.
The coating solution is preferably prepared using the alkoxytitanium and the alkoxysilane as described above along with a solvent and the like described later because materials are readily prepared and a related-art coating method can be employed for preparing a coating film.

### <Alkoxytitanium>

Examples of the alkoxytitanium include a compound of Formula (1):

Ti(OR¹)₄ (1)

(where R¹ is a C₁₋₆ alkyl group).
Specific examples of the compound of Formula (I) include tetramethoxytitanium, tetraethoxytitanium, tetraisoprapoxytitanium, tetra-n-propoxytitanium, tetra-n-butoxytitanium, tetraisobutoxytitanium, tetra-t-butoxytitanium, and tetrapentaxytitanium.
Among them, preferably used is tetraethoxytitanium, tetraisopropoxytitanium, or tetra-n-butaxytitanium.

When alkoxytitanium is used, it is usually solvated with a stabilizer such as β-diketones and glycols for use in order to suppress excessive progress of hydrolysis/condensation.
Specific examples of the stabilizer used here include β-diketanes such as acetylacetone, methylacetylacetone, ethyacetylacetone, and diethylacetylacetone; and glycols such as ethylene glycol, propylene glycol, and ethylene glycol dimethyl ether.

### <Alkoxysilane>

Examples of the alkoxysilane include a compound of Formula (2):

(R²)ₙSi(OR³)₄₋ₙ (2)

(where R² is a C₁₋₆ alkyl group, a C₁₋₆ alkenyl group, and an aryl group, R³ is a C₁₋₆ alkyl group, and n is an integer of 0 to 2).
Specific examples of the compound of Formula (2) include tetraalkoxysilanes, trialkoxysilanes, and dialkoxysilanes.
Specific examples of the alkoxysilane are shown below but the alkoxysilane is not limited to them.

Examples of the tetraalkoxysilanes include tetramethoxysilane, tetraethoxysilane, tetrapropoxysilane, and tetrabutoxysilane. Preferred examples include tetramethoxysilane and tetraethoxysilane.

Examples of the trialkoxysilanes include methyltrimethoxysilane, methyltriethoxysilane, ethyltrimethoxysilane, ethyltriethoxysilane, propyltrimethoxysilane, propyltriethoxysilane, butyltrimethoxysilane, butyltriethoxysilane, pentyltrimethoxysilane, pentyltriethoxysilane, hexyltrimethoxysilane, hexyltriethoxysilane, heptyltrimethoxysilane, heptyltriethoxysilane, octyltrimethoxysilane, octyltriethoxysilane, stearyltrimethoxysilane, stearyltriethoxysilane, vinyltrimethoxysilane, vinyltriethoxysilane, 3-chloropropyltrimethoxysilane, 3-chloropropyltriethoxysilane, 3-hydroxypropyltrimethoxysilane, 3-hydroxypropyltriethoxysilane, 3-glycidoxypropyltrimethoxysilane, 3-glycidoxytriethoxysilane, 3-methacryloxytrimethoxysilane, 3-methacryloxytriethaxysilane, phenyltrimethoxysilane, phenyltriethoxysilane, trifluoropropyltrimethoxysilane, and trifluoropropyltriethoxysilane. Preferred examples include methyltrimethoxysilane, methyltriethoxysilane, vinyltrimethoxysilane, vinyltriethoxysilane, 3-hydroxypropyltrimethoxysilane, 3-hydroxypropyltriethoxysilane, 3-glycidoxypropyltrimethoxysilane, 3-glycidoxytriethoxysilane, 3-methacryloxytrimethaxysilane, 3-methacryloxytriethoxysilane, phenyltrimethoxysilane, phenyltriethoxysilane, trifluoropropyltrimethoxysilane, and trifluoropropyltriethoxysilane.

Examples of the dialkoxysilanes include dialkoxysilanes such as dimethyldimethoxysilane and dimethyldiethoxysilane.

These alkoxysilane may be used as a condensation compound such as methyl silicate and ethyl silicate in addition to the monomer form.

### <compounding Ratio of Alkoxytitanium and Alkoxysilane>

The compounding ratio of the alkoxytitanium and the alkoxysilane used for the coating solution is preferably alkoxytitanium : alkoxysilane = 5 : 95 to 95 : 5 based on the molar ratio. The compounding ratio is more preferably alkoxytitanium : alkoxysilane 50 : 50 to 95 : 5 and most preferably 70 : 30 to 95 : 5, based on the molar ratio.
Metal alkoxides such as the alkoxytitaniums and the alkoxysilanes may be accordingly selected as necessary for use and may be used in a combination of two or more of them.

### <Solvent Used for Coating Solution>

A solvent used in combination with the alkoxytitanium and the alkoxysilane in the coating solution is not specifically limited as long as it can dissolve the metal alkoxides and/or a condensation product of them.
Examples of the solvent include alcohols such as methanol, ethanol, propanol, and butanol; ketones such as acetone and methyl ethyl ketone; aromatic hydrocarbons such as benzene, toluene, and xylene; glycols such as ethylene glycol, propylene glycol, and hexylene glycol; glycol ethers such as ethyl cellosolve, butyl cellosolve, ethyl carbitol, butyl carbitol, diethyl cellosolve, and diethyl carbitol; and N-methylpyrrolidone and dimethylformamide.
These solvents may be used alone or as a mixture of two or more of them.

### <Others Such As Catalyst>

Transition metal alkoxide compounds such as the alkoxytitaniums have curability with respect to light. However, as a catalyst for further enhancing the photocurablity, it is desirable that a metal nitrate is added in a range from 0.005 to 2 based on the molar ratio with respect to the transition metal alkoxide.
Examples of the metal nitrate include a nitrate of at least one metal selected from a group consisting of metals in Group IIa, Group IIIa, Group IVa, Group Va, Group IIIb, Group IVb, Group Vb, Group VIIb, and Group VIII of the periodic table.
Preferred examples include nitrates of barium, magnesium, aluminum, indium, lead, bismuth, yttrium, cerium, niobium, tantalum, chromium, molybdenum, tungsten, manganese, iron, cobalt, palladium, copper, and cadmium.
Specifically preferred examples include aluminum, indium, bismuth, yttrium, cerium, chromium, tungsten, manganese, iron, cobalt, copper, and cadmium.
The type of such metal nitrate is not specifically limited as long as it is dissolved in the solvents and, as necessary, such metal nitrates can be accordingly selected for use. For such case, these metal nitrates may be used alone or in combination of two or more of them.

### <Preparation Method of Coating Solution>

The metal alkoxides (alkoxytitaniums, alkoxysilanes) used for preparing the coating solution are hydrolyzable. On this account, the metal alkoxides are hydrolyzed/condensed in a solvent during the preparation of the coating solution.
Thus, a part of or all of the metal alkoxide may be hydrolyzed and condensed in the prepared coating solution. That is, a polycondensation product of the alkoxytitanium and the alkoxysilane is present in the coating solution of the present invention. Here, the polycondensation product of the alkoxytitanium and the alkoxysilane may include various polycondensation products such as a polycondensation product of the alkoxytitanium and a polycondensation product of the alkoxysilane.
The hydrolysis/condensation reaction can be also controlled by the amount of water added in the system.

For preparing the coating solution, the addition order of metal alkoxides (alkoxytitaniums, alkoxysilanes), a solvent, and the like is not specifically limited.
A commonly used method is that alkoxytitanium is previously mixed with a solvent to prepare a solution and components such as water and a catalyst are added. Here, alkoxysilane may be mixed with the solvent concurrently with the alkoxytitanium or may be added after the addition of the alkoxytitanium. At that time, the alkoxysilane may be diluted with the solvent in advance.

In order to suppress the hydrolysis of alkoxytitanium, a mixed solution of the alkoxytitanium and a solvent may be previously cooled to prepare the coating solution. Alternatively, the coating solution may be prepared with cooling or may be cooled after preparation.
Water and a catalyst may be mixed for addition or may be added separately. Water and a catalyst are usually added as a solution diluted with a solvent. Examples of the catalyst used here include acids such as hydrochloric acid, sulfuric acid, nitric acid, acetic acid, formic acid, oxalic acid, phosphoric acid, and maleic acid; and alkalis such as ammonia.

In order to control the reaction rate of hydrolysis/condensation of a metal alkoxide, a mixed solution of the metal alkoxide and a solvent may be heated. The heating temperature and the heating time can be accordingly selected. Furthermore, during heating of the mixed solution of the metal alkoxide and a solvent, water and a catalyst may be added.

### <Other Components>

Other components such as inorganic particles, a surfactant, and a leveling agent can be added to the coating solution of the present invention as necessary, provided that they do not impair advantages of the present invention.

### <Method for Forming Optical Waveguide>

The optical waveguide of the present invention is composed of a lower clad portion and a core/clad layer. The core/clad layer is formed on a top surface of the lower clad portion and includes a core region having a higher refractive index and a clad region having a refractive index lower than that of the core region. If desired, the optical waveguide further includes an upper clad portion that is formed on the core/clad layer.

The optical waveguide of the present invention is mainly formed on a substrate. Examples of the substrate used here include a silicon wafer and glass, ceramics, metal, and plastic substrates, and examples of the shape include a plate and a film.
Commercial products are preferably used due to availability, and preferable examples include a silicon wafer, a glass wafer, and a composite material substrate for a printed wiring board.
Examples of the plastic substrate include substrates made of polycarbonate, poly(meth)acrylate, polyethersulfone, polyacrylate, polyurethane, polysulfone, polyether, polyetherketone, polyolefin, polyethylene terephthalate, polyacrylonitrite, triacetyl cellulose, diacetyl cellulose, polyimide, and acetate butyrate cellulose.

The lower clad portion desirably has sufficient transparency with respect to a beam transmitted through the core region in the core/clad layer. From the viewpoint of beam transmission, the lower clad portion desirably has substantially the same refractive index as that of the clad region in the core/clad layer.
Furthermore, in order to reduce the difference in physical properties from those of the core/clad layer and to improve the adhesiveness and the like to the core/clad layer, it is effective to prepare the lower clad portion from a material containing a titanium atom and a silicon atom in a similar manner to that for the core/clad layer.
The lower clad portion preferably has a refractive index lower than that of the clad region in the core/clad layer because photon tunneling can be suppressed. However, in the case of SiO₂ an adequate film thickness is about 2,000 nm or more.
For such lower clad portion, a cured film obtained from a coating solution containing a hydrolysate and/or a condensation product of a metal alkoxide (such as alkoxysilane) may be used. Alternatively, a glass substrate or a ceramics or plastic substrate having high transparency may be used in place of them.

As described above, because materials are readily prepared and a related art method can be employed, the core/clad layer is preferably prepared by applying the coating solution containing a polycondensation product of alkoxytitanium and alkoxysilane to the lower clad portion to form a coating film, and irradiating the coating film with ultraviolet light under heating.

The coating solution can be applied by common coating methods such as dipping, spin coating, flexographic printing, brush coating, roll coating, and spraying. The coating solution is commonly filtered through a filter or the like before coating.
The present invention can employ not only a form of the coating film formed using the coating solution but also a form of a solution-held or solution-filled region that is formed by holding, in a space for connection or structure formation, the same solution as the coating solution that includes an oxide precursor containing a titanium atom and a silicon atom or by filling the space with the solution. Then, the solution region is irradiated with ultraviolet light under heating to form a core/clad layer including an irradiated core region that has a higher refractive index and a clad region that is an unirradiated region or a region irradiated with low energy and that has a refractive index lower than that of the core region.
Here, as shown in FIG. 6A, the form in which a space for connection holds the solution is a state in which a solution 1 containing an oxide precursor is held between two end faces of optical waveguides 2 by surface tension. As shown in FIGS. 6B and 6C, the form in which a space for structure formation is filled is a state in which the space is filled with the solution 1 containing an oxide precursor so as to connect or bond the optical waveguides 2 to each other set on a substrate 1 (or inside the substrate), or a state in which the space is filled with the solution 1 so as to connect or bond the optical waveguide 2 to a light source 4, for forming an object structure. In order to hold the solution 1 containing an oxide precursor or fill the space with the solution 1, for example, the solution may be added dropwise into the space for connection or structure formation. When the solution-held or solution-filled region is formed, the solution 1 may cover a part of the optical waveguide 2.

The coating film formed in this manner on the lower clad portion is dried at a temperature of, for example, 25°C to 220°C before irradiation.
A method for drying at a temperature higher than 25°C (heat-treating) is not specifically limited, and examples of the method include a method using a hot plate or an oven in a suitable atmosphere, namely, in air, an inert gas such as nitrogen, and a vacuum. The drying temperature is preferably 40°C or more and more preferably 12d°C or more in order to reduce the amount of residual solvent in a coating film.
The drying time may be 30 seconds or more and is 10 minutes or less for adequate drying.
The drying (heat treatment) may be carried out in two or more temperature steps. A stepwise drying (heat treatment) further improves the uniformity of the coating film.

The film thickness is preferably 100 nm to 400 nm in a coating film obtained by single coating. This is because a coating film having a film thickness of more than 400 nm may cause a crack in the core/clad layer, for example, by heat treatment (solvent drying) after the coating or by heat treatment during the irradiation step after that.
When the coating film of a desired thickness cannot be obtained by single coating/heat treatment, the step of coating/heat treatment may be repeated until a desired film thickness is obtained.

Next, the completed coating film is irradiated with a radiation beam under heating.
Examples of the radiation beam for irradiating the coating film include radiation beams (such as ultraviolet light) from a laser beam source, a mercury lamp, a metal halide lamp, a xenon lamp, and an excimer lamp. The irradiation amount of radiation beam can control the refractive index and the length of the manufactured core. Commonly, the irradiation amount is suitably several thousands to several tens of thousands mJ/cm².

Such radiation beam has the effect of eliminating a stabilizer. When a radiation beam is applied under heating, the stabilizer is eliminated and condensation reaction is developed immediately after that. As a result, the irradiated region obtains an increased refractive index to form a core.

Among radiation beams, ultraviolet light having a short wavelength of around 254 nm is preferred because it has large energy, and thus has a large effect of accelerating the elimination of a stabilizer. Consequently, a less amount of irradiation can increase the refractive index in an area to be a core region. Furthermore, as a radiation beam having larger energy, an electron beam and the like are effectively used.
The wavelength of a radiation beam and the heating temperature can control the shape such as width and length of a core to be manufactured.

The coating film is irradiated with a radiation beam through a photomask under heating or is scanned with a laser beam under heating, and as a result an optical waveguide having a desired shape can be prepared in the coating films. Specifically, a linear waveguide, a curved waveguide, a waveguide lens, a waveguide prism, and the like can be prepared. Furthermore, when the coating film is irradiated with a radiation beam from an oblique direction, a 45° mirror can be prepared in the coating film. Such 45° mirror is effectively used to connect an optical waveguide in the coating film with a light source such as VCSEL, a photodetector, or a longitudinal optical waveguide. A mirror having another angle can be prepared by adjusting an irradiation angle in addition to the 45° mirror.
Moreover, when a radiation beam is applied through an optical waveguide previously formed in the coating film or through an optical waveguide set near an end face of the coating film, it is possible to prepare in the coating film a self-organizing optical waveguide having a core that is axially aligned with that of the previously prepared optical waveguide. Furthermore, when a radiation beam is directly applied to an end face of the coating film from a light source without passing through an optical waveguide, a self-organizing optical waveguide that is not axially misaligned with the light source can be prepared in the coating film. At this time, the light source or the optical waveguide set near an end face of the coating film may be in contact with the coating films; however, a medium such as air or a refractive index matching agent may be interposed therebetween.
The optical waveguide used here for irradiation is not specifically limited, and a common optical waveguide can be used. However, an optical waveguide desirably has features that the optical waveguide can well transmit a radiation beam such as ultraviolet light to a coating film in the manufacturing process, and that the optical waveguide itself is not decomposed by a radiation beam.

After reconsidering the matter, it is preferable to use a radiation beam that is hard to decompose an optical waveguide used for irradiation, that is, to use, for example, visible light having a wavelength of 400 nm or more, because it has small energy and therefore can suppress the decomposition of the optical waveguide.
On this account, when a coating film in an area where a self-organizing waveguide is intended to be formed is locally irradiated with visible light having a wavelength of 400 nm or more through an optical waveguide with heating, a self-organizing optical waveguide can be prepared without decomposition of the optical waveguide.

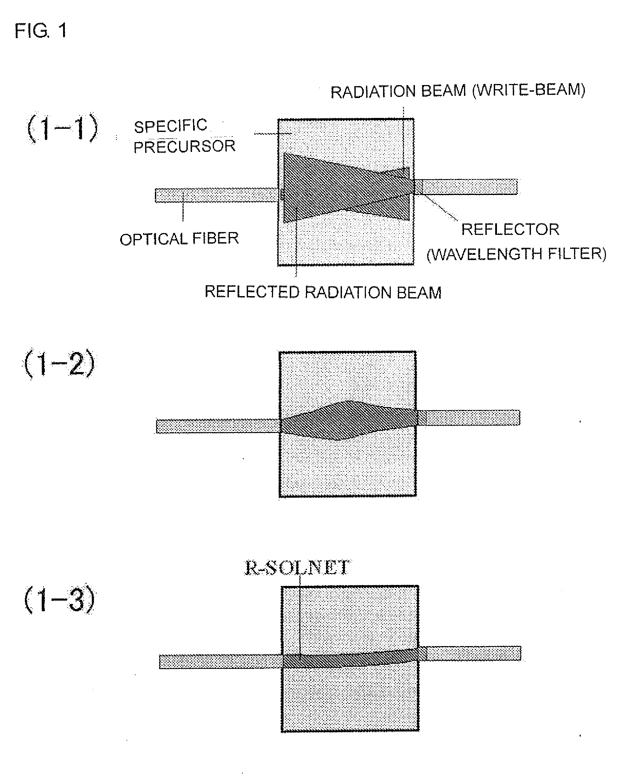

FIG. 1 (FIGS. 1-1 to 1-3) shows the principle of the reflective self-organized lightwave network (R-SOLNET). The R-SOLNET is a phenomenon that a self-organized lightwave network is induced by reflected light. When a reflector that reflects a radiation beam (in this case, write-beam) (a wavelength filter which reflects a write-beam and transmits a signal beam in the drawings) is placed and a radiation beam is applied, the radiation beam is overlapped with the reflected radiation beam (1-1), and the refractive index in the overlapped area is increased to cause self-focusing (1-2). As a result, a self-organized lightwave network is drawn to the reflector, and waveguides having misaligned optical axes are automatically connected to each other (1-3) (see Tetsuzo Yoshimura and Hiroshi Kaburagi, "Self-Organization of Optical Waveguides between Misaligned Devices Induced by Write-Beam Reflection", Applied Physics Express, 1 (2008), pp. 062007).
In other words, according to the present invention, not only a common self-organizing optical waveguide but also the R-SOLNET can be prepared.
Furthermore, a layer containing the core/clad layer can be separated from a substrate to prepare a film for use. In this case, it is attached to a semiconductor chip, a wiring board, or the like for easy integration. It is also effectively used for a three-dimensional optical circuit.

The heating temperature during irradiation of a radiation beam is 25°C to 250°C and preferably 120°C to 250°C, as described above. The heat treatment accelerates the hydrolysis/condensation of a metal alkoxide to complete a core/clad layer. Time required for the heat treatment is usually 5 to 60 minutes and may be 10 minutes. When a low heating temperature is selected, a stable core/clad layer is readily obtained by heating for a long time.

The core/clad layer prepared in this manner can be used as an optical waveguide without any treatment when air is regarded as an upper clad portion. However, in order to prevent contamination of the core/clad layer and changes in the transmission characteristics caused by the contamination, an upper clad portion is usually formed using a resin and the like to cover the core/clad layer.

The upper clad portion desirably has substantially the same refractive index and physical properties as those of the clad region in the core/clad layer as with the lower clad portion described above. For example, when a coating film is prepared using the coating solution for preparing the core/clad layer and the whole area is heat-treated without irradiation, an upper clad portion having the same composition as that of the clad region in the core/clad layer can be prepared. This case is preferred because the same coating solution can be used for the core/clad layer and the upper clad portion and consequently the number of materials can be reduced.

### Examples

Hereinafter, the present invention will be specifically described with reference to examples, but the present invention is not limited to the following examples.

### Preparation Example 1: Preparation of Coating Solution]

Into a 300 ml-flask, 1.2 g of pure water and 5.3 g of aluminium nitrate nonahydrate were placed, and the whole was stirred to give a homogeneous solution. To the solution, 6.9 g of ethylene glycol, 4.9 g of propylene glycol (another name: 1,2-propanediol), and 18.6 g of butyl cellosolve (another name: 1-methoxy-2 -ethanol) were added as solvents, and the whole was stirred at room temperature for 10 minutes. Then, 2.9 g of tetraethoxysilane was added and the whole was stirred at room temperature for 30 minutes to prepare a solution 1.
Separately, into a 100 ml-flask, 15.8 g of tetraisopropoxytitanium and 44.3 g of propylene glycol as a stabilizer were placed, and the whole was stirred at room temperature for 30 minutes. Then, the solution was added to the solution 1 above, and the whole was stirred at room temperature for 30 minutes to prepare a coating solution 1 for manufacturing an optical waveguide.

### <Evaluation of Refractive Index>

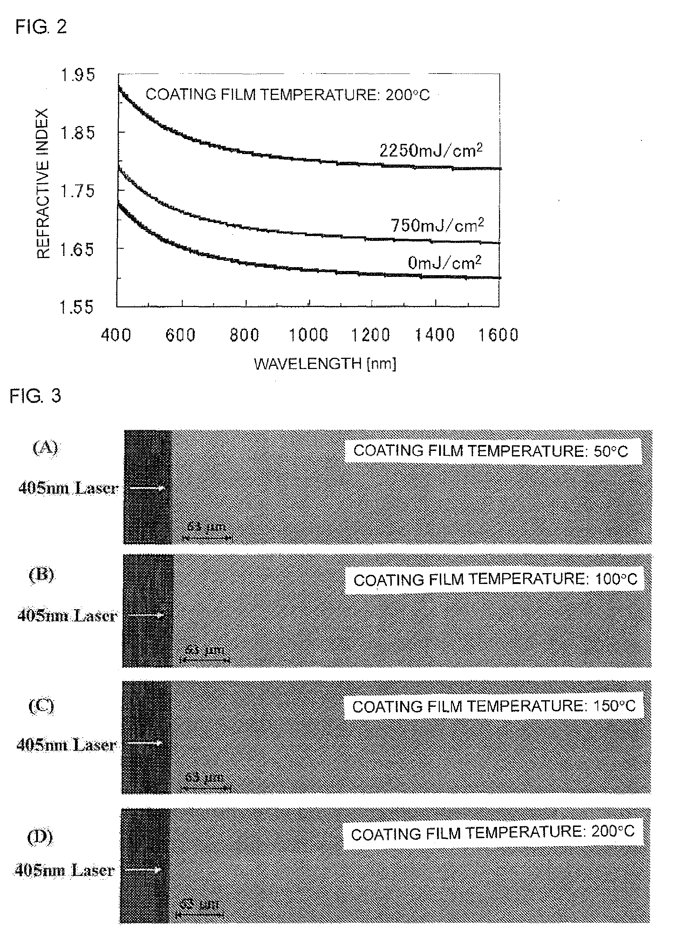

The coating solution 1 was applied to a glass substrate by spin coating, and then the coated substrate was treated with heat on a hot plate at 200°C for removing the solvents in the coating film to form a coating film having a film thickness of 240 nm.
The coating film was irradiated with ultraviolet light having a light intensity of 5 m W/cm² at a wavelength of 365 nm using a metal halide lamp (LC-8 manufactured by Hamamatsu Photonics K.K.) at 750 mJ/cm² while heating at 200°C. In a similar procedure, each of a coating film irradiated with ultraviolet light having a light intensity of 5 mW/cm² at a wavelength of 365 nm at 2250 *mJ*/*cm²* and a coating film without irradiation of ultraviolet light was formed on the substrate.
Each refractive index of these three coating films was determined using an ellipsometer (M-2000 VI manufactured by J.A. Woollam) in a wavelength range from 400 nm to 1600 nm. Table 1 shows the refractive indexes at wavelengths of 650 nm, 850 nm, 1310 nm, and 1550 nm, and FIG. 2 shows the refractive index changes in a wavelength range from 400 nm to 1600 nm.

**[Table 1]**

| Measurement wavelength | Ultraviolet irradiation amount | | | Δn (2250 mJ/0 mJ) |
|---|---|---|---|---|
| | 0 mJ/cm² | 750 mJ/cm² | 2250 mJ/cm² | |
| 650 nm | 1.643 | 1.704 | 1.834 | 10.4% |
| 850 nm | 1.621 | 1.682 | 1.810 | 10.4% |
| 1310 nm | 1.603 | 1.664 | 1.791 | 10.5% |
| 1550 nm | 1.600 | 1.660 | 1.787 | 10.5% |

### [Example 1]

On a silicon wafer having a SiO₂ film with a thickness of 2000 nm, the coating solution 1 prepared in Preparation Example 1 was applied by spin coating. The SiO₂ film was used as a lower clad portion here. Subsequently, the silicon wafer was moved onto a hot plate, and treated with heat at 80°C for 3 minutes and then at 200°C for 15 minutes for removing the solvents in the coating film to form a coating film.

While heating the silicon wafer on a hot plate at various temperatures shown below, a laser beam at a wavelength of 405 nm having a light intensity of 0.5 mW/cm² was applied for I minute through a single mode fiber from an end face of the coating film to prepare a self-organizing optical waveguide. Subsequent heating was not performed. An upper clad portion was not prepared to leave air.
The self-organizing optical waveguide was observed from the upper clad portion of the optical waveguide (from the air layer) under a microscope. The results are shown in FOGS. 3A to 3D. The temperatures of the coating film during laser beam irradiation are as shown below.

| | | |
|---|---|---|
| (A): | Coating film temperature | 50°C |
| (B): | Coating film temperature | 100°C |
| (C): | Coating film temperature | 150°C |
| (D): | Coating film temperature | 200°C |

### [Example 2]

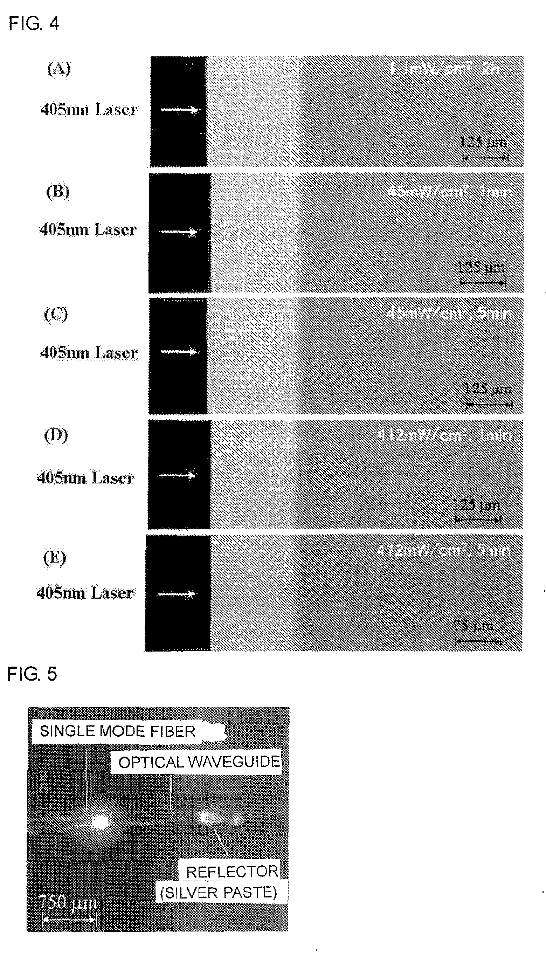

While heating a silicon wafer having a coating film formed in a similar procedure to that in Example 1 on a heated optical stage at 100°C, a laser beam at a wavelength of 405 nm having various light intensities shown below was applied for various amounts of irradiation time shown below through a single mode fiber from an end face of the coating film to prepare a self-organizing optical waveguide. Subsequently, the self-organizing optical waveguide was treated with heat on a hot plate at 200°C for 15 minutes to increase a relative refractive index difference between the core and the clad. Here, an upper clad portion was not prepared to leave air.
The self-organizing optical waveguide was observed from the upper clad portion of the optical waveguide (from the air layer) under a microscope. The results are shown in FIGS. 4A to 4E, The light intensities and irradiation times of the radiation beam during laser beam irradiation are as shown below (each value in parentheses is the amount of irradiation).

| | | |
|---|---|---|
| (A): | Light intensity | 1.1 mW/cm², for 2 hours (7920 mJ/cm²) |
| (B): | Light intensity | 45.0 mW/cm², for 1 minute (2740 mJ/cm²) |
| (C): | Light intensity | 45.0 mW/cm², for 5 minutes (13500 mJ/cm²) |
| (D): | Light intensity | 412.0 mW/cm², for 1 minute (24720 mJ/cm²) |
| (E): | Light intensity | 412.0 mW/cm², for 5 minutes (123600 mJ/cm²) |

### [Example 3]

A coating film was formed on a silicon wafer in a similar procedure to that in Example 1, and subsequently a part of the coating film was chipped off to prepare a defect. To the defect, a silver paste was inserted to prepare a block of the silver paste as a reflector in the coating film.
While heating the silicon wafer on a heated optical stage at 200°C, a laser beam at a wavelength of 405 nm having a light intensity of 0.5 mW/cm² was applied for an irradiation time of 50 seconds at an irradiation amount of 2.5 mJ/cm² through a single mode fiber from an end face of the coating film to prepare an R-SOLNET. Here, an upper clad portion was not prepared to leave air.
The R-SOLNET was observed from the upper clad portion of the optical waveguide (from the air layer) under a microscope. The result is shown in FIG. 5.

### [Evaluation Result]

As specifically shown in FIG. 2 and Table 1, each refractive index difference (Δn) of the coating film irradiated with ultraviolet light at 2250 mJ/cm² and the coating film without irradiation of ultraviolet light (0 mJ/cm²) was 10.0% or more in each wavelength.
In other words, it was ascertained that the optical waveguide prepared according to the present invention obtains a refractive index difference larger than that of an optical waveguide using a related art resin compound in a wide wavelength range including all of 1310 nm and 1550 nm that are so-called communication wavelengths and of 850 nm that has been studied for using as interconnect.
Such high confinement optical waveguide having a high Δn value can be used for connecting between optical waveguides having a relatively low Δn value, such as optical fibers, but in specific, can provide its characteristics for connecting between wiring layers of optical wiring in a chip having a high Δn value. The length required for connecting a self-organizing optical waveguide in the optical wiring in a chip is considered to correspond to the thickness (about 300 nm) of global wiring of common electrical wiring in a chip. Thus, as shown in Examples, the optical waveguide prepared according to the present invention has an enough length and is practicable.

From the observation results of the optical waveguides in FIGS. 3 and 4, it was obviously observed that irradiation under heating provided the refractive index difference between a core region and a clad region to cause reflective difference and consequently the self-organizing optical waveguide was formed.
As shown in FTG 3, when the wavelength and light intensity of a radiation beam and the irradiation time were fixed and the heating temperature was varied, the prepared self-organizing optical waveguide had a longer length with the increase of the heating temperature. Furthermore, a high temperature increased a contrast between the core region and the clad region. This is because the heating accelerates the reaction in an irradiated region to increase the refractive index difference.

From the observation results of the optical waveguides in FIG. 4, it was obviously observed that when the light intensity and irradiation time of the radiation beam were controlled, the shape of the prepared self-organizing optical waveguide could be controlled. In other words, each tapered shape shown in FIGS. 4A to 4D is caused by a convergent radiation beam from an optical fiber due to a self-formed core and is a shape of a typical self-organizing optical waveguide.

From the observation results of the optical waveguide in FIG. 5, it was obviously observed that a bent self-organizing optical waveguide was formed between the single mode fiber and the reflector (silver paste) and that a laser beam transmitted through the optical waveguide. In other words, it was ascertained that the self-organizing optical waveguide prepared in Example 3 was a high confinement optical waveguide having a small width.

### INDUSTRIAL APPLICABILITY

According to the manufacturing method of the present invention, a self-organizing optical waveguide having a large optical confinement effect can be readily manufacture. Such optical waveguide is effectively used for downsizing base stations in optical fiber communication and optical communication devices such as routers and splitters in residences. It is also effectively used for the application requiring high density wiring, such as a central processing unit and memory in a computer and a printed circuit board.

### Description of the Reference Numerals

- 1: solution containing oxide precursor
- 2: optical waveguide
- 3: substrate
- 4: light source

## Claims

1. A method for manufacturing an optical waveguide, the method comprising step (A) and step (B):
step (A): forming a coating film on a lower clad portion using a solution including an oxide precursor containing a titanium atom and a silicon atom, or holding the solution in a space for connection or structure formation or filling the space with the solution; and
step (B): irradiating the coating film or a region where the solution is held or filled with a radiation beam under heating to form a core/clad layer including an irradiated core region having a higher refractive index and a clad region having a refractive index lower than that of the core region, the clad region remaining unirradiated or irradiated with low energy.

2. The method for manufacturing an optical waveguide according to claim 1, comprising step (A) and step (B):
step (A): forming a coating film on a lower clad portion using a coating solution including an oxide precursor containing a titanium atom and a silicon atom; and
step (B): irradiating the coating film with a radiation beam under heating to form a core/clad layer including an irradiated core region having a higher refractive index and an unirradiated clad region having a refractive index lower than that of the core region.

3. The method for manufacturing an optical waveguide according to claim 2,
wherein the radiation beam is applied in the direction of beam transmission in the optical waveguide in step (B).

4. The method for manufacturing an optical waveguide according to claim 2 or 3, wherein the radiation beam is a laser beam in step (B).

5. The method for manufacturing an optical waveguide according to any one of claims 2 to 4, wherein the coating film is homogeneously formed to have a constant molar ratio of the titanium atom and the silicon atom over the coating film in step (A).

6. The method for manufacturing an optical waveguide according to any one of claims 2 to 5, wherein a coating solution having a titanium atom and silicon atom molar ratio of titanium atom (mol) : silicon atom (mol) = 5 : 95 to 95 : 5 is used in step (A).

7. The method for manufacturing an optical waveguide according to any one of claims 2 to 6, further comprising:
step (C): forming an upper clad portion on the core/clad layer.

8. The method for manufacturing an optical waveguide according to claim 7,
wherein in step (C), the upper clad portion is formed using the coating solution including an oxide precursor containing a titanium atom and a silicon atom described in step (A).

9. The method for manufacturing an optical waveguide according to claim 7 or 8, wherein step (C) includes applying the coating solution including an oxide precursor containing a titanium atom and a silicon atom described in step (A) to the core/clad layer, and subsequently heat-treating the solution at 25°C to 250°C to form the upper clad portion on the core/clad layer.

10. The method for manufacturing an optical waveguide according to any one of claims 2 to 9, wherein the coating film is formed from a coating solution containing a polycondensation product of alkoxytitanium and alkoxysilane.

11. The method for manufacturing an optical waveguide according to claim 1, comprising step (A) and step (B):
step (A): holding a solution including an oxide precursor containing a titanium atom and a silicon atom in a space for connection or structure formation or filling the space with the solution; and
step (B): irradiating a region where the solution is held or filled with a radiation beam under heating to form a core/clad layer including an irradiated core region having a higher refractive index and a clad region having a refractive index lower than that of the core region, the clad region remaining unirradiated or irradiated with low energy.
